# EUROPEAN PATENT APPLICATION

(11) **EP 1 480 186 A1**
(43) Date of publication of application: **24.11.2004**
(21) Application number: 02730711.5
(22) Date of filing: 24.05.2002
(51) Int. Cl.: G08G 1/0969, G01C 21/00

(54) **A METHOD AND APPARATUS FOR TRANSMITTING POSITION INFORMATION**

(30) Priority: 28.02.2002 JP 2002054076
(71) Applicant: MATSUSHITA ELECTRIC INDUSTRIAL CO., LTD., Kadoma-shi, Osaka 571-0050 (JP)
(72) Inventor: ADACHI, Shinya, Yokohama-shi, Kanagawa 227-0038 (JP)
(74) Representative: Balsters, Robert
(86) International application number: PCT/JP2002/005072
(87) International publication number: WO 2003/073396

(57) **Abstract**

The entire block of the transmission area of information such as shape vector data representing road shape and event information is divided into partitions of a plurality of layers and block definition is made so that the data amount in each partition is approximately equal. The transmitting side generates and transmits shape vector data, event information, shape vector index data including reference data indicating correspondence between the block definition and each partition, and a shape vector list indicating shape vector data contained in each partition. The receiving side calculates partitions necessary for processing and extracts shape vector data contained in the partitions based on the shape vector index data and the shape vector list, then performs shape matching of the extracted shape vector data and identifies the section and the position in the section on the map to which the event information corresponds.

## Description

### < Technical Field >

The present invention relates to a position information transmission apparatus and method for transmitting information, which are shape information and related information, to mobile terminals. The shape information of roads represents map information. The related information includes event information, which are traffic congestion, accidents, or such, related to the shape information and position information of the events. The apparatus and method is used, for example, in traffic information providing systems and map information delivery systems.

### < Background Art >

In recent years, more and more on-board navigation apparatus to display the map and traffic information around the current position have been in practical use. The on-board navigation apparatus maintains a digital map database and is capable of displaying the map around the vehicle on a screen based on the latitude/longitude data received by a GPS receiver as well as displaying the travel track and the result of search for a route to the destination on .the map. Recent on-board navigation apparatus is capable of receiving traffic information such as traffic congestion information and accident information provided from a traffic information providing system to display traffic congestions and accident positions on a map as well as perform a route search from criteria including such information.

In the current traffic information providing system, traffic information is supplied from a traffic information collecting center, which has local jurisdiction over an area, to an information delivery center. Traffic information edited for each transmis s ion medium (FMbroadcasts, roadbeacons and cellular phones) is transmitted via respective communications media. For example, in terms of an FM broadcast, an information delivery center transmits traffic information approximately on a single prefecture to each on-board apparatus of an on-board navigation system. A map displayed on a monitor of an on-board apparatus of a receiving side covers only the area around the vehicle. The screen display area is much smaller than the information providing area by the FM broadcast. Thus it is necessary to extract the information within an area suitable for display from the traffic information on the whole area provided on the basis of the prefecture, and display the information corresponding to the map information.

In the above mentioned on-board navigation system compatible with the traffic information providing system, the ability for displaying of the on-boar apparatus in the receiving side is affected by the efficiency for searching of the related information included in the display area and the speed for processing in case of displaying the related information, for example, such as traffic information corresponding to the map information.

As disclosed in the Japanese Patent Laid-Open No. 41757/2001, the applicant proposes a digital map position information transmission method and apparatus compatible with a system whereby road position information is transmitted by using road shape data indicating the road shape of a road section, relative position data indicating a road position in the road section, and shape, the road section on a digital map is identified by shape matching of the road shape data at the receiving side, and the roadposition in the road section is identifiedby using the relative position data (this system is hereinafter referred to as a map matching system). In the position information transmission apparatus using the map matching system, the related information such as traffic information is transmitted as data represented by road shape data. Therefore, the data amount of the road shape data is greater than that in a conventional position information identifier system. The amount of processing of shape matching is also increased. In case of that traffic information is displayed over the map information on the on-board apparatus of the receiving side, determining whether each piece of huge road shape data in the entire information providing area is mandatory data related to the display area and extracting only such data results in considerable workload and time. Thus, in this particular map matching system, an efficient search for the information in the area necessary for display out of the information on the entire area provided is extremely advantageous in terms of display performance.

In a traffic information providing system of a conventional position information identifier system, a secondary mesh number indicating a secondary mesh obtained by dividing a digital map into certain areas and a link number representing a road section in a mesh are use to transmit traffic information. The secondary mesh, however, is constant in size irrespective of the density of roads and traffic information amount. Thus the secondary mesh is not always efficient in extracting information on the area necessary for data display.

### < Disclosure of the Invention >

The invention is proposed in view of the aforementioned circumstances and aims at providing position information transmission apparatus and its method for extracting information on the area necessary for representing the information including shape information as map information such as roads and related information on the events such as traffic congestions and accidents as well as their positions in transmitting and representing such information.

A position information transmission apparatus for transmitting a position on a digital map according to the invention, the apparatus comprising position information generating means for generating position information including shape information, which represent a shape of an object on a map and have a road shape data representing a road shape within a predetermined road section, and related information, which have a relative position data indicating a position within the predetermined road section corresponding to the shape information; index information generating means for generating index information, which indicate correspondence of shape information contained in individual partitions, by dividing an information providing area of the shape information and related information into a plurality of partitions; information transmission means for transmitting transmission data having the position information and the index information; information receiving means for receiving the transmission data and obtaining the position information and the index information; shape information extracting means for calculating a necessary partition from the divided plurality of partitions and extracting shape information contained in the partition; and position identification means for performing shape matching of the extracted shape information to identify a section representedby the shape information on a digital map and identifying a position in the section by using the related information corresponding to the shape information.

According to the configuration, by dividing into a plurality of partitions the information providing area of shape information such as road shape data and related information such as event information related to road traffic and using index information indicating correspondence of shape information contained in individual partitions, it is possible to calculate a necessary partition out of the plurality of partitions and efficiently extract shape information contained in this partition based on this index information and identify a position in a predetermined section in a predetermined partition indicated by the shape information and related information. It is thus easy to efficiently perform shape matching of shape information and displayeventinformationsuch as traffic congestions and accidents as processing related to the shape information and related information.

. The position information transmission apparatus according to the invention, wherein the positioninformation generating means generates, as the related information, event information representing an event related to road traffic by using a relative position corresponding to the shape information, and the position information transmission apparatus further comprising information representation means for representing the event information on the position, which is identified by the position identification means on the digital map, with superposing on the digital map within predetermined area.

According to the configuration, it is possible to efficiently extract shape information in a necessary partition among a plurality of partitions and obtain event information related to road traffic as related information corresponding to the shape information to identify an event position in a section in the partition, thus displaying event information on a digital map at a high speed. This lets the user obtain the event position information easily and without delay.

The position information transmission apparatus according to the invention is characterized in that the index information generating means generates, as the index information, block definition indicating the position and area of a entire block of the information providing area and the number of partitions in the entireblock, reference data indicating correspondence between the partitions, and a shape information list indicating shape information in each partition by extracting the shape information from each partition and listing the extracted shape information.

According to the configuration, it is possible to extract shape information and related information contained in the partition by using block definition, reference data and a shape information list.

The positioninformation transmission apparatus according to the invention is characterized in that when the index information means determines the block definition and divides the block into a plurality of partitions, the index information generating means performs dividing the block into partitions repeatedly by using the shape information in the block and a partition criteria parameter utilized as a standard of a processing amount the related information until a predetermined condition defined by the partition criteria parameter is satisfied. According to the configuration, by dividing the entire block into partitions until a condition predetermined by the partition criteria parameter, it is possible to obtain for example number of node points in road shape data as shape information, amount of road shape data, and total length of road of road shape data in each partition approximately equivalent to each other, thus dividing the throughput of shape information and related information almost equally by partition and allowing efficient processing in terms of extraction of necessary shape information and display of related information.

The position information transmission apparatus according to the invention is characterized in that the index information generating means determines the block definition variably depending on the state of the shape information and related information and divides the block into a plurality of partitions.

According to the configuration, it is possible to always maintain the appropriate throughput of shape information and related information by partition, by varying the partitioning on the basis of time zones, depending on the state of shape information and related information, for example the road traffic state such as traffic congestions and density of traffic accidents.

The position information transmission apparatus according to the invention is characterized in that the shape information extracting means extracts a block at least partially overlapping a necessary processing area based on the position and the area of the entire block determined by the block definition and the area where the related information is represented, and extracts shape information in the extracted block based on the reference data and shape information list.

According to the configuration, it is possible to efficiently extract the shape information of a partition necessary for processing such as data display based on the block definition, reference data and a shape information list.

The position information transmission apparatus according to the invention is characterized in that the apparatus further comprising a plurality of code tables used for coding the shape information, wherein the index information generating means generates, as the index information, code table information for referencing a suitable code table to coding of shape information in each partition of the divided block in the partitions.

According to the configuration, it is possible to encode shape information by using an optimum code table in each partition and decode the shape information by referencing the optimum code table in each partition by way of code table information.

A position information transmission apparatus for transmitting a position on a digital map according to the invention, comprising a transmitting side apparatus, wherein the transmitting side apparatus includes: position information generating means for generating position information including shape information, which represent a shape of an object on a map and have a road shape data representing a road shape within a predetermined road section, and related information, which have a relative position data indicating a position within the predetermined road section corresponding to the shape information; index information generating means for generating index information, which indicate correspondence of shape information contained in individual partitions, by dividing an information providing area of the shape information and relatedinformationinto a plurality of partitions; and information transmission means for transmitting transmission data having the position information and the index information.

According to the configuration, by dividing into a plurality of partitions the information providing area of shape information such as road shape data and related information such as event information related to road traffic, and generating and transmitting index information indicating correspondence of shape information contained in individual partitions it is possible for a receiving side to calculate a necessary partition out of the plurality of partitions and efficiently extract shape information contained in this partition based on this index information and identify a position in a predetermined section in a predetermined partition indicated by the shape information and related information. It is thus easy to efficiently perform shape matching of shape information and display event information such as traffic congestions and accidents as processing related to the shape information and related information.

A position information transmission apparatus for transmitting a position on a digital map according to the invention comprising a receiving side apparatus, wherein the receiving side apparatus includes: information receiving means for receiving transmission data transmitted from a transmitting side apparatus and obtaining position information and the index information, wherein the position information include shape information which represent a shape of an object on a map and have a road shape data representing a road shape within a predetermined road section, and related information which have a relative position data indicating a position within the predetermined road section corresponding to the shape information, and wherein the index information indicate correspondence of shape information contained in individual partitions by dividing an information providing area of the shape information and related information into a plurality of partitions; shape information extracting means for calculating a necessary partition from the divided plurality of partitions and extracting shape information contained in the partition; position identification means for performing shape matching of the extracted shape information to identify a section represented by the shape information on a digital map and identifying a position in the section by using the related information corresponding to the shape information; and information representation means for representing the related information on the position, which is identified by the position identification means on the digital map, with superposing on the digital map within predetermined area. According to the configuration, by receiving transmission data from the transmitting side and obtaining to use index information indicating correspondence of shape information contained in individual partitions, it is possible to calculate a partition necessary for data display and efficiently extract shape information contained in the partition and identify a position in a predetermined section in a predetermined partition indicated by the shape information and related information. It is thus easy to efficiently perform shape matching of shape information and display event information such as traffic congestions and accidents as processing related to the shape information and related information.

The position information transmission apparatus according to the invention is characterized in that attribute information of the position information is added to the index information.

According to the configuration, it is possible to select shape information depending on the throughput of the receiving side apparatus and the representation form of a map and an event, by adding road information such as length information and road type present in the shape information of the partition as attribute information, thus efficiently and properly representing event information.

The position information transmission apparatus according to the invention is characterized in that the index information includes the area of the shape information.

According to the configuration, it is made easy to extract shape information via a position by including the area of shape information (area in the latitude/longitude direction and partition number of the partition) to index information.

A position information transmission apparatus for transmitting a position on a digital map according to the invention, the apparatus comprising: position information generating means for generating position information including shape information, which represent a shape of an object on a map and have a road shape data representing a road shape within a predetermined road section, and related information, which have a relative position data indicating a position within the predetermined road section corresponding to the shape information; index information generating means for generating index information, which indicate correspondence of shape information contained in individual partitions, by dividing an information providing area of the shape information and related information into a plurality of partitions; information output means for outputting transmission data having the position information and the index information against information transmission means; information input means for inputting the transmission data transmitted through the information transmission means and obtaining the position information and the index information; shape information extracting means for calculating a necessary partition from the divided plurality of partitions and extracting shape information contained in the partition; and position identification means for performing shape matching of the extracted shape information to identify a section represented by the shape information on a digital map and identifying a position in the section by using the related information corresponding to the shape information.

According to the configuration, by dividing into a plurality of partitions the information providing area of shape information such as road shape data and related information such as event information related to road traffic and using index information indicating correspondence of shape information contained in individual partitions, it is possible to calculate a necessary partition out of the plurality of partitions and efficiently extract shape information contained in this partition based on this index information and identify a position in a predetermined section in a predetermined partition indicated by the shape information and related information.

A position information transmission apparatus for transmitting a position on a digital map according to the invention, the apparatus comprising an outputting side apparatus, wherein the outputting side apparatus includes: position information generating means for generating position information including shape information, which represent a shape of an object on a map and have a road shape data representing a road shape within a predetermined road section, and related information, which have a relative position data indicating a position within the predetermined road section corresponding to the shape information; index information generating means for generating index information, which indicate correspondence of shape information contained in individual partitions, by dividing an information providing area of the shape information and related information into a plurality of partitions; and information output means for outputting transmission data having the position information and the index information.

According to the configuration, by dividing the information providing area for providing the shape information including the road shape date or such and the related information including the event information regarding road traffic or such into the plurality of partitions, and by generating, outputting, and transmitting the index information indicating the correspondence of the shape information included in each partition, at the information inputting side, it is possible to effectively extract the shape information, which is included in the necessary partitions calculated from the plurality of partitions, and identify the position within the predetermined section in the predetermined block indicated with the shape information and the related information.

A position information transmission apparatus for transmitting a position on a digital map according to the invention, comprising a inputting side apparatus, wherein the inputting side apparatus includes: information input means for inputting transmission data transmitted through information transmission meansand obtaining positioninformation and the index information, wherein the position information include shape information which represent a shape of an object on a map and have a road shape data representing a road shape within a predetermined road section, and related information which have a relative position data indicating a position within the predetermined road section corresponding to the shape information, and wherein the index information indicate correspondence of shape information contained in individual partitions by dividing an information providing area of the shape information and related information into a plurality of partitions; shape information extracting means for calculating a necessary partition from the divided plurality of partitions and extracting shape information contained in the partition; position identification means for performing shape matching of the extracted shape information to identify a section represented by the shape information on a digital map and identifying a position in the section by using the related information corresponding to the shape information; and information representation means for representing the related information on the position, which is identified by the position identification means on the digital map, with superposing on the digital map within predetermined area. According to the configuration, by inputting the transmission data transmitted from the information outputting side through the information transmission means and obtaining and using the index information, which indicates the correspondence of the shape information included in each partition of the divided block, it is possible to calculate the necessary partition for processing of display or such, effectively extract the shape information included the necessary partition, and identify the position within the predetermined section in the predetermined block indicated with the shape information and related information.

A position information transmission method for transmitting a position on a digital map according to the invention, the method comprising the steps of:position information generating forgeneratingpositioninformation including shape information, which represent a shape of an object on a map and have a road shape data representing a road shape within a predetermined road section, and related information, which have a relative position data indicating a position within the predetermined road section corresponding to the shape information; index information generating for generating index information, which indicate correspondence of shape information contained in individual partitions, by dividing an information providing area of the shape information and related information into a plurality of partitions; transmitting information for transmitting transmission data having the position information and the index information; receiving information for receiving the transmission data and obtaining the position information and the index information; extracting shape information for calculating anecessarypartition from the divided plurality of partitions and extracting shape information contained in the partition; and identifying position for performing shape matching of the extracted shape information to identify a section represented by the shape information on a digital map and identifying a position in the section by using the related information corresponding to the shape information.

According to the.above mentioned steps, by dividing into a plurality of partitions the information providing area of shape information such as road shape data and related information such as event information related to road traffic and using index information indicating correspondence of shape information contained in individual partitions, it is possible to calculate a necessary partition out of the plurality of partitions and efficiently extract shape information contained in this partition based on this index information and identify a position in a predetermined section in a predetermined partition indicated by the shape information and related information. It is thus easy to efficiently perform shape matching of shape information and display event information such as traffic congestions and accidents as processing related to the shape information and related information.

A position information transmission method for transmitting a position on a digital map according to the invention, the method comprising the steps of:position information generating for generatingpositioninformation including shape information, which represent a shape of an object on a map and have a road shape data representing a road shape within a predetermined road section, and related information, which have a relative position data indicating a position within the predetermined road section corresponding to the shape information; index information generating for generating index information, which indicate correspondence of shape information contained in individual partitions, by dividing an information providing area of the shape information and related information into a plurality of partitions; outputting information for outputting transmission data having the position information and the index information against information transmission means; inputting information for inputting the transmission data transmitted through the information transmission means and obtaining the position information and the index information; extracting shape information for calculating a necessary partition from the divided plurality of partitions and extracting shape information contained in the partition; and identifying position for performing shape matching of the extracted shape information to identify a section represented by the shape information on a digital map and identifying a position in the section by using the related information corresponding to the shape information.

According to the above mentioned steps, by dividing the information providing area, which is the area for providing the shape information including the road shape data or such and the related information event information regarding road traffic, into the plurality of partitions, and by using the index information indicating the correspondence of the shape information included in each partition, at the information inputting side, it is possible to effectively extract the shape information included in the necessary partition calculated from the plurality of partitions and identify the position within the predetermined section in the predetermined block indicated with the shape information and the related information.

The invention also provides a program used by a computer to execute the position information transmission method.

By executing the program on a computer to follow the procedure for the position information transmission method, it is possible to identify a position in a predetermined section in a predetermined partition indicated by the shape information and related information. It is thus easy to efficiently perform shape matching of shape information and display event information such as traffic congestions and accidents as processing related to the shape information and related information.

### < Brief Description of Drawings >

Figs. 1(A) and (B) show an example of block definition of an information providing area in this embodiment;
Fig. 2 shows an example of shape vector data in partitions in this embodiment;
Fig. 3 is an explanatory drawing showing an example of transmission data structure in the first embodiment of the invention;
Fig. 4 is an explanatory drawing showing exemplary shape vector data;
Fig. 5 is a block diagram showing the functional configuration of transmitting side apparatus in on-board navigation apparatus according to this embodiment;
Fig. 6 is a block diagram showing the functional configuration of receiving side apparatus in on-board navigation apparatus according to this embodiment;
Fig. 7 is a flowchart showing the processing procedure in the transmitting side apparatus;
Fig. 8 is a flowchart showing the processing procedure in the receiving side apparatus;
Fig. 9 is an explanatory drawing showing a shape vector list according to a first variation;
Fig. 10 is an explanatory drawing showing a shape vector list according to a second variation;
Fig. 11 is a block diagram showing the functional configuration of transmitting side apparatus in on-board navigation apparatus according to an example of modification of this embodiment;
Fig. 12 is a block diagram showing the functional configuration of receiving side apparatus in on-board navigation apparatus according to an example of modification of this embodiment;
Fig. 13 is an explanatory drawing showing an example of transmission data structure according to the second embodiment of the invention;
Figs. 14(A) and (B) are explanatory drawings showing an example of vector data representation and distribution of its angle components; and
Figs. 15(A) and (B) are explanatory drawings showing an example of distribution of angle components of shape vector data in the urban areas and mountain areas.

In the figures, numeral 101 represents display area, 102 position of the vehicle, 105 shape vector data, 201 shape vector data index data, 202, 212, 401 and 402 shape vector list, 203 shape vector data string, 204 event information, 210 block definition, 211 primary partition, 212 secondary partition, 213 tertiary partition, 215 code table data, 301 center apparatus (transmitting side apparatus), 302 on-board apparatus (receiving side apparatus), 311 event information (delivery information), 312 and 326 digital map database, 313 transmit event information generating section, 314 partition calculating section, 315 partition-shape vector correspondence calculating section, 316 data encoding section, 317 data transmitter, 318 shape vector representation event information, 320 data receiver, 321 data decoding section, 322 position decision section, 323 display controller, 324 display area-partition number correspondence calculating section, 325 shape vector extracting section, 327 map matching section, 331 GPS receiver, 332 Gyro sensor, 333 velocity sensor, 334 display section, 335 input section, and 341 information delivery center.

### < Best Mode for Carrying Out the Invention >

Embodiments of the invention will be described referring to drawings.

As an embodiment according to position information transmission apparatus and its method of the invention, configuration and operation of on-board navigation apparatus for transmitting and displaying traffic information from a traffic information providing system to a on-board apparatus will be described.

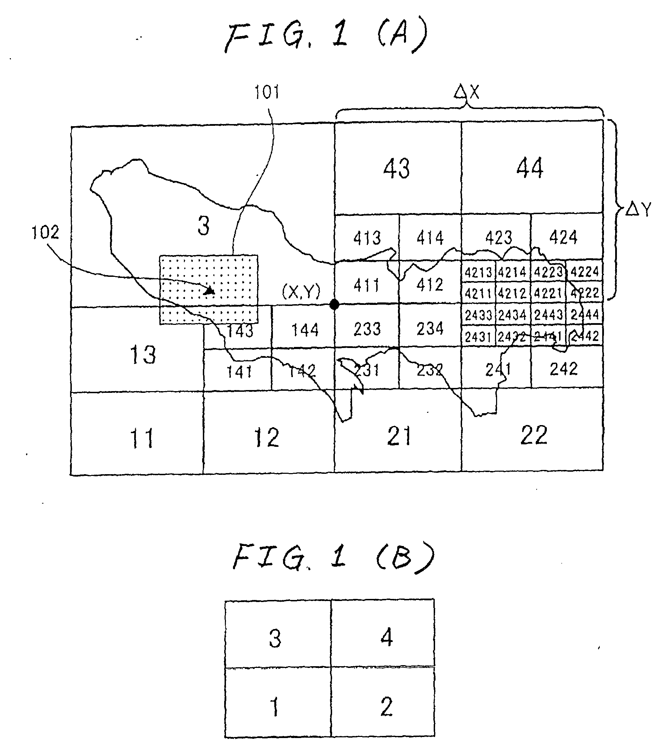

First of all, the embodiment is outlined referring to Fig. 1. Fig. 1 shows an example of block definition of an information providing area in this embodiment.

On-board navigation apparatus compatible with a traffic information providing system transmits as event information the traffic information such as traffic congestions and traffic accidents from center apparatus of a traffic information providing system, receives this information on on-board apparatus and corresponds this event information with map information owned by the on-board apparatus, and displays traffic information together with the map around the vehicle on display apparatus. In this practice, event information in a wide area on a per prefecture basis is transmitted by the center apparatus to the on-board apparatus. The on-board apparatus extracts information necessary for data display and route calculation out of various event information and display such information in correspondence with the map information or represent such informationby way of recorded announcement or alert tones.

In a map matching system where road shape data (shape information) and relative position data (related information) in a road section as disclosed in the aforementioned Japanese Patent Laid-Open No. 41757/2001 is used to transmit on-road position information and shape matching of road shape data is made at the receiving side to identify a road section on a digital map, then the relative position data is used to identify an on-road position in the road section, extraction of related information such as event information may take time in displaying information. In the map matching system, the related information has relative position data corresponding to road shape data representing each road shape and event detail information indicating the details of an event such as a traffic congestion and a traffic accident. Related information is shown in a position in the road section in respective road shape data by way of relative position data. Thus, more efficient processing is desired in order to facilitate extraction of related information to be displayed around the vehicle out of the related information defined in correspondence to individual road shape data items.

In the embodiment, as shown in Fig. 1, the entire area to which the road shape data and event information correspond is divided into a plurality of, in this example four layers of areas (partitions) and block definition is made so that the data amount in each partition will be approximately equal. In this case, when event information is displayed together with map information, a partition contained in the display area is extracted and road shape data and event information in the partition are extracted. This block definition serves as so called index information which allows an efficient search for necessary information.

As shown in Fig. 1(A), the area of a rectangle covering the entire Tokyo metropolitan area is assumed as a single unit of information providing area whose information is to be transmitted from the center apparatus of a traffic information providing system to a on-board apparatus and this rectangle is assumed as an entire block. As shown in Fig. 1(B), rectangles obtained by dividing the entire block into four, the rectangles of the primary layer are defined using numbers 1 through 4. The four partition numbers may be represented in two bits. In case each rectangle is further divided into four, numbers 1 through four are defined to each partition to represent partition numbers comprising the numbers of the upper layer plus numbers thus defined. For example, a rectangle of the secondary layer is represented by a two-digit number and a rectangle of the tertiary layer by a three-digit number. To represent a more minute rectangle, the number of digits is increased in the same way.

The example of Fig. 1(a) is represented by rectangles of four layers obtained by dividing an entire block into four partitions in the primary to quaternary layers. The number of layers may be set as required. Such a partition-defined number allows the area of an rectangle in an arbitrary layer to be uniquely represented using an information amount smaller than that of a latitude/longitude representation. When a geographical position in the primary layer (latitude/longitude) is identified, an arbitrary partition may be converted to a latitude/longitude representation.

Aposition definition in the primary layer is represented by the latitude/longitude (X, Y) of the center of the entire block (crossing of division lines of partitions of the primary layer) and the size of each partition in the latitude direction and longitude direction (ΔX, ΔY). The position of each partition may be represented using the left bottom and upper right latitude/longitude (X1, Y1) (X2, Y2). The rectangle of the entire block as a source of partitions in a plurality of layers may be arbitrarily defined to the real shape of the information providing area, without sticking to the mesh of an existing position information identifier system. According to shape of each prefecture, in a map whose upside indicate the direction due north, for example, Tokyo metropolitan area which spreads over the horizontal direction is defined as a block whose width is longer than its length, and Ibaraki Prefecture is defined as a block whose length is longer than its width. Therefore, depending on the situation, the aspect ratio of the entire block, center coordinates (X, Y) and size (ΔX, ΔY) may be changed in accordance with the shape of each prefecture.

Generally in on-board navigation apparatus, the data amount of road shape data depends on the density of roads. Thus the amount of data transmitted is small in mountain areas and small in urban areas. The amount of traffic information provided is small in mountain areas and small in urban areas. Shape vector length of road shape data is longer in urban areas and shorter in mountain areas. Position display on an on-board apparatus is likely to shrink and display area is likely to be larger in mountain areas while it is likely to expand and display area is likely to be smaller in mountain areas. The block definition of division into the plurality of layers is preferably made so that a partition will be larger in mountain areas and smaller in urban areas.

For example, in the case of a display area 101 and a position of the vehicle 102 as shown in Fig. 1(A) where event information corresponding to the area of the display area 101 is displayed together with the map information, road shape data in partitions 3, 13, 143 should be searched for to extract event information corresponding to each item of road shape data.

Structure of transmission data generated based on the block definition will be described. In on-board navigation apparatus of a map matching system, center apparatus at the sensing party uses road shape data representing the shape of roads on a map to define the event information such as traffic congestions and accidents as relative position data in a road section per road shape data item, and transmits the road shape data and the relative position data. On-board apparatus at the receiving side performs shape matching of road shape data in map information owned by the on-board apparatus and.the road shape data transmitted and identifies the road section on a map as well as accurately identify a position corresponding to the event information in the road section.

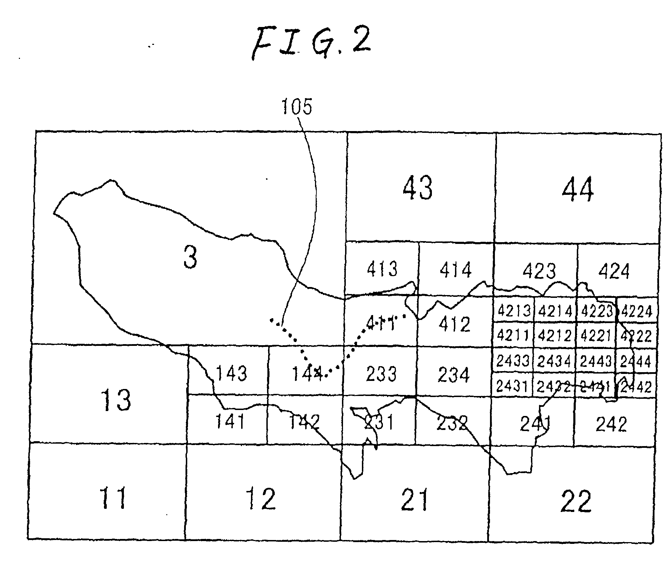

In general, the shape vector data corresponding to road shape data is determined considering prevention of erroneous matching and improvement in the data compression ratio. Thus, shape vector data rarely matches the boundary of partitions thus defined. An item of shape vector data may be defined by a plurality of partitions. Fig. 2 shows an example of shape vector data in partitions in this embodiment. Shape vector data 105 extends over a plurality of partitions so that the shape vector 105 is defined by the four partitions 3, 144, 233, 411. In case the conditions of prevention of erroneous matching and improvement in the data compression ratio are satisfied, shape vector data may be divided at the boundary of partitions.

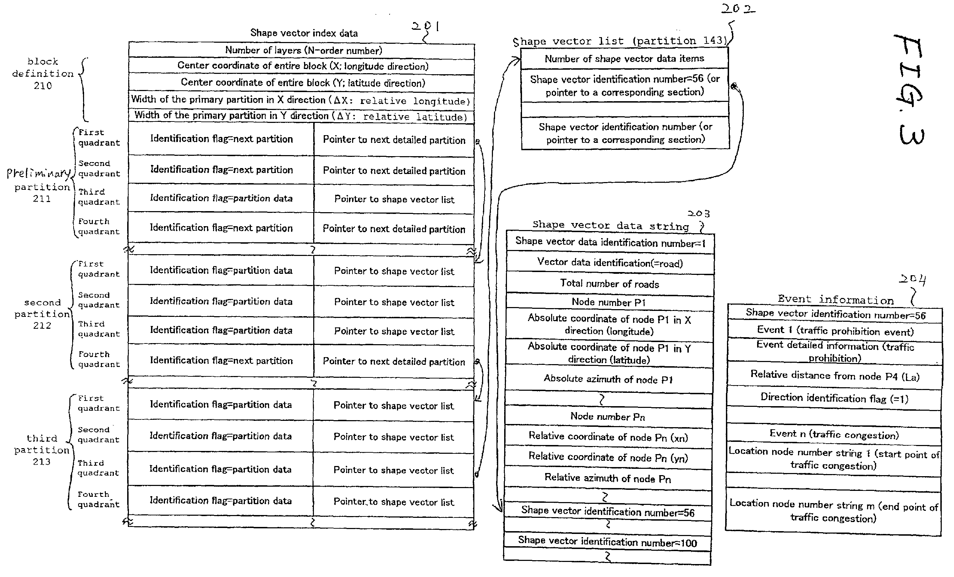

In this embodiment, as shown in Fig. 3, shape vector data index data corresponding to the block definition is created and a list of numbers of shape vector data at least partially included in each partition is prepared. Fig. 3 is an explanatory drawing showing an example of transmission data structure in the first embodiment of the invention. In some cases, shape vector data may contain a section "without information" where significant information, information used to display roads and for other processing, is nonexistent in order to prevent erroneous matching. In this case, partitions containing significant information out of shape vector data are assumed as partitions containing at least part of the shape vector data, and the numbers of shape vector data items contained in individual partitions are listed.

In the following description, each partition in the Nth layer is represented as an Nth partition. Each rectangle obtained by dividing the original partition by four is represented as an Mth quadrant in correspondence with a partition number. As shown in Fig. 3, transmission data sent from the center apparatus of a traffic information providing center to on-board apparatus comprises shape vector index data 201, a shape vector list 202, a shape vector data string 203 and event information 204. The shape vector index data 201 and the shape vector list 202 correspond to index information, the shape vector data string 203 to shape information, and the event information 204 to related information.

The shape vector index data 201 is index data to search for shape vector data and includes block definition 210 to define partitions in a plurality of layers and comprises reference data 211, 212, 213, ... indicating the correspondence of partitions in each layer, the primary layer, secondary layer and tertiary layer. In the block definition 210, the number of layers as well as the center coordinates (X, Y) of the entire block and the width of the primary partition in the XY directions (ΔX, ΔY) are provided to define the geographical position, size and minuteness of a partition. In the reference data 211, 212, 213,... in each partition, an identification flag and a pointer are provided. In case a lower layer is provided (identification flag=next partition), a pointer to the next detailed partition is set. In the case of a final partition (identification flag=partition data), a pointer to a shape vector list is set.

The shape vector list 202 is a list of shape vector data (shape information list) contained at least partially in individual partitions. The list contains the number of shape vector data items in the partition and a shape vector identification numbers allocated to identify individual shape vector data items. The shape vector identification number serves as a pointer to the corresponding shape vector data.

The shape vector string 203 is a group of a plurality of shape vector data items representing individual road shapes in the entire block and has a shape vector identification number of each shape vector, vector data type (such as road), total number of shape vector nodes, node numbers, absolute coordinates (latitude/longitude in the XY directions) and bearing of the first node (Node P1), and relative coordinates and bearing of the second and subsequent nodes (Node P2, P3,...).

The event information 204 is data indicating the details and position of each event provided in relation to the shape vector data and has a shape vector identification number indicating the corresponding shape vector data, respective event number, event type information (traffic accident, traffic congestion), and position information. In case the event is traffic prohibition, event details information, relative distance from a predetermined node, and a direction identification flag are provided. In case the event is a traffic congestion, a node number string of the event position (node numbers of the traffic congestion start point and the traffic congestion end point, relative distance from the node) is provided.

Fig. 3 shows an example of a procedure for extracting the shape vector data contained in the partition 143 using the block definition. As shown in crosshatched areas and arrows, pointers are references in the order of the first quadrant of the primary partition, fourth quadrant of the secondary partition, third quadrant of the tertiary partition, to obtain the shape vector list 202 in the partition 143. By using the shape vector list 202, a shape vector identification number (56 in this example) is obtained showing the shape vector data contained in the partition 143. A pointer to shape vector data in the section may be used instead of a shape vector identification number. The shape vector data having the corresponding number 56 is extracted using a shape vector identification number. As the event information 204, by using the shape vector identification number, event information is extracted representing the type andposition of event associated in the shape vector data 56.

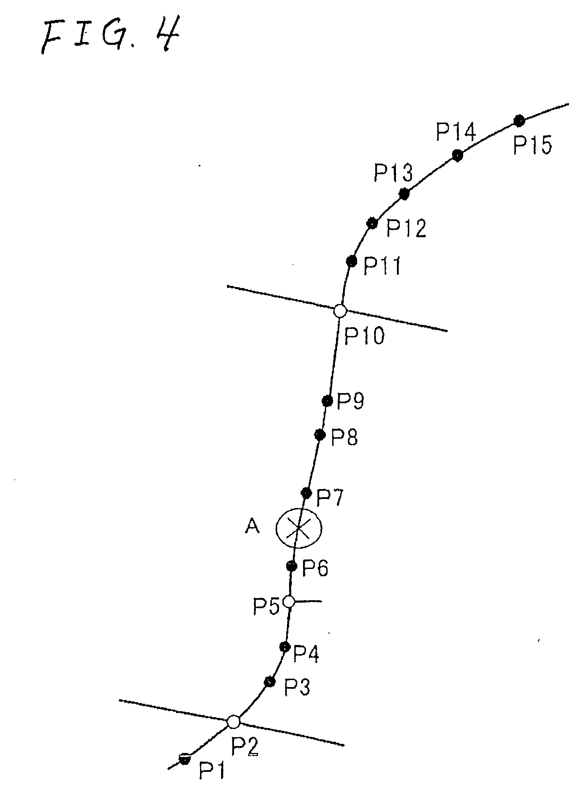

As shown in Fig. 4, the shape vector data uses nodes and interpolation points (these are hereinafter called nodes) as a plurality of points on a road contained in a digital map database to represent the road shape of the road sectionbyway of a coordinate data string indicating the positions of a plurality of nodes P1 through Pn (N=15 in the example of Fig. 4). Coordinate data of each node is represented by absolute coordinates (latitude and longitude) for a start point node P1, and by relative coordinates from a start point node or an adjacent node for the remaining nodes P2 through Pn. The relative coordinates may be represented by a latitude and a longitude or by the distance and deflection angle from an adjacent node.

Event information represents the details and position of an event in the road section by way of position data to show the position of the event point A and the event type information. Position data of the event point is represented by the distance from a predetermined node in the shape vector data in the road section.

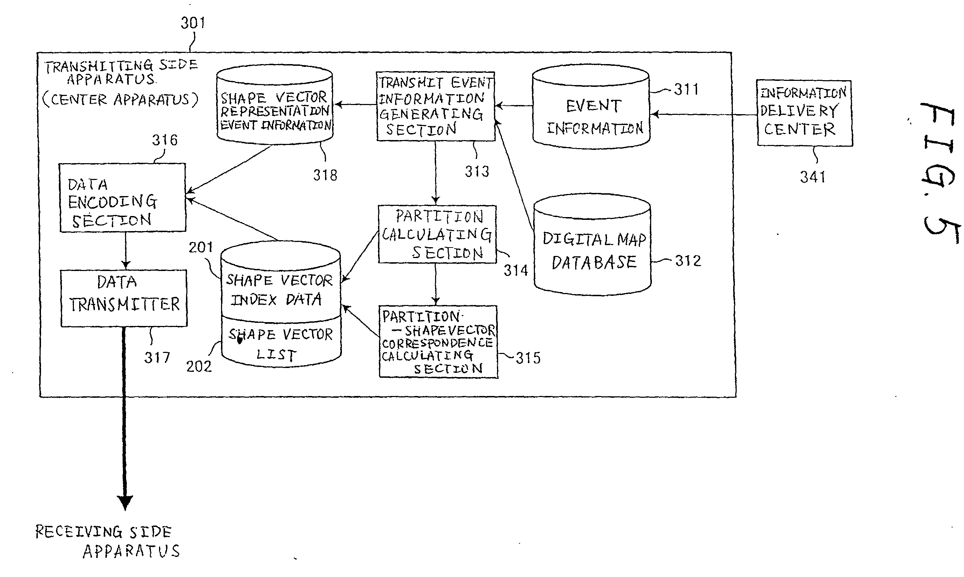

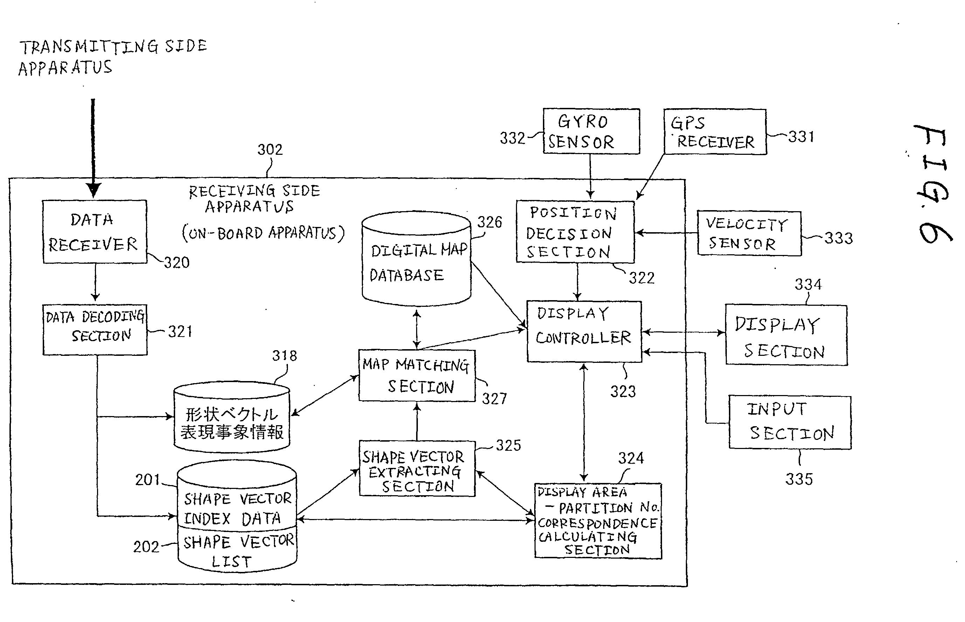

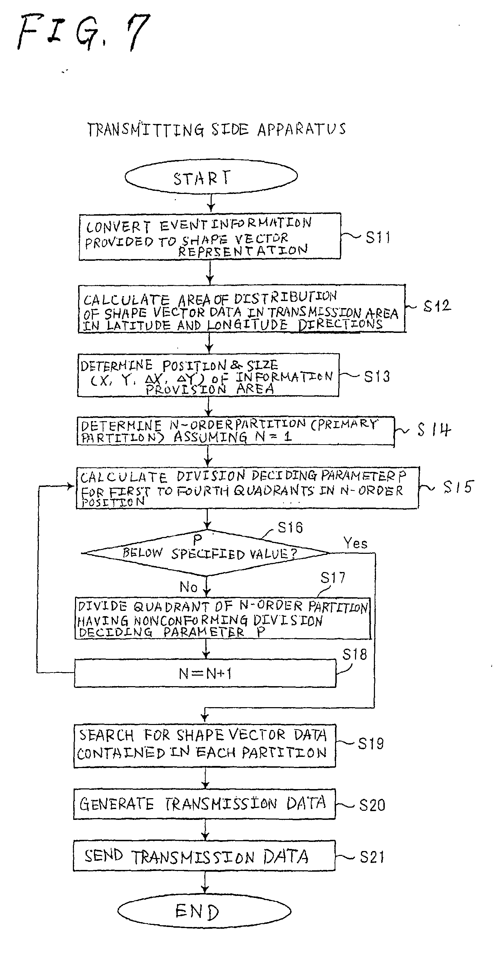

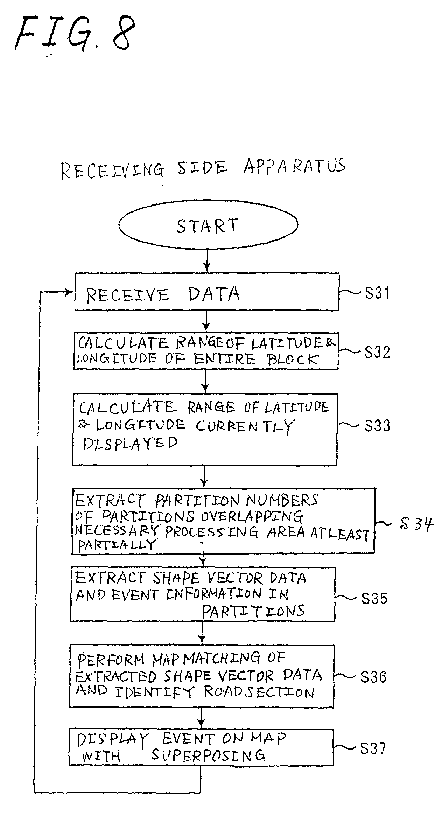

An example of apparatus configuration and operation will be described in detail concerning generation and transmission of transmission data containing the aforementioned event information and extraction and display of necessary transmission data on the receiving side. Fig. 5 is a block diagram showing the functional configuration of transmitting side apparatus in on-board navigation apparatus according to this embodiment. Fig. 6 a block diagram showing the functional configuration of receiving side apparatus in on-board navigation apparatus according to this embodiment. Fig. 7 is a flowchart showing the processing procedure in the transmitting side apparatus. Fig. 8 is a flowchart showing the processing procedure in the receiving side apparatus.

As shown in Fig. 5, center apparatus 301 as transmitting side apparatus comprises a transmit event information generating section 313 as position information generating means for generating transmit shape vector representation event information 318 based on event information 311 such as traffic information provided by an information delivery center 341 such as a traffic control center working as an information source. The shape vector representation event information 318 is equivalent to the shape vector data string 203 and event information 204 in Fig. 3. The center apparatus 301 also comprises a partition calculating section 314 and a partition-shape vector correspondence calculating section 315 as index information generating means for generating shape vector index data 201 including block definition and a shape vector list 202.

The center apparatus 301 further comprises a data encoding section 316 for encoding the shape vector index data 201, shape vector list 202, and shape vector representation event information 318 thus generated to perform data compression, and a data transmitter 317 as transmission means for sending transmission data thus compressed/encoded to on-board apparatus. The data transmitter 317 generates transmission data mainly in conformity with various communications media that use mobile radio communications including digital ground wave broadcasts, FM broadcasts, and mobile communications systems such as cell phones, and transmits the resulting data to on-board apparatus in the information providing area.

As shown in Fig. 6, on-board apparatus 302 as receiving side apparatus comprises a data receiver 320 as information receiving means for receiving transmission data sent from the center apparatus 301 and a data decoding section 321 for decoding the received data encoded and compressed to expand the data to regenerate the shape vector index data 201, shape vector list 202, and shape vector representation event information 318. The on-board apparatus 302 also comprises a position decision section 322 for determining the position of the vehicle based on the output of a GPS receiver 331, a gyro sensor 332, and a velocity sensor 333, and a display controller as information representation means for controlling display of map information and traffic information to be displayed on a display section 334.

The on-board apparatus 302 further comprises a display area-partition number correspondence calculating section 324 for calculating the correspondence between the display areas and partition numbers based on the shape vector index data 201 and the current display area in the display section 334 , a shape vector extracting section 325 as shape information extracting means for extracting shape vector data contained in the display area based on the corresponding data calculated by the display area-partition number correspondence calculating section 324, and a map matching section as position identification means for performing shape matching of transmission data and local apparatus data concerning shape vector data by using the extracted shape vector data, shape vector representation event information 318 and a digital map database 326 of the local apparatus.

Operation procedure for generation and transmission of transmission data in transmitting side apparatus will be described referring to Fig. 7.

In the center apparatus 301 of the transmitting side, first of all, the transmit event information generating section 313 converts the event information 311 such as traffic information provided by an information source to a shape vector representation to generate shape vector representation event information 318 (step S11). That is, the center apparatus 301 generates a shape vector data string 203 and event information 204 as shape vector representation event information 318.

Next, the partition calculating section 314 calculates the area of distribution of shape vector data in the transmission area in latitude and longitude directions (step S12) and determines the position and size (X, Y), (ΔX, ΔY) of the entire block representing the information providing area (step S13). Then the partition calculating section 314 divides the N-order partition (primary partition) assuming N=1 into first to fourth quadrants (step S14).

The partition calculating section 314 calculates the division deciding parameter P for the first to fourth quadrants in the N-order partition (initially the primary partition) (step S15). As the division deciding parameter P, the total number of shape vector data configuration points (nodes), data amount of shape vector data, and total road length of shape vector data, all of these being contained in the partition at least partially, are used. The partition calculating section 314 then determines whether the values of the division deciding parameter P are below a specified value (step S16). In case any division deciding parameter P exceeds the specified value, the partition calculating section 314 divides a quadrant of the N-order partition having a nonconforming division deciding parameter P into first to fourth quadrants (step S17). Eachpartition thus divided is the N+1-order partition.

In step S18, execution returns to step S15 assuming N=N+1. Processing in steps S15 through S18 is repeated until the values of the division deciding parameter P in all the partitions becomes smaller than the specified value. Thus the data amount of shape vector data in each partition is below the specified value. This results in an approximately equal throughput of extraction and shape matching of shape vector data in any partition in the process of displaying map information and event information on on-board apparatus. In other words, an area with higher road density is divided minutely into more layers while an area with lower road density is divided coarsely into less layers. Block definition of a plurality of layers that vary depending on areas is determined. Shape vector index data 201 is createdbasedon the block definition. In this case, it is possible to make partitions in a variable way based on the time zones depending on the amount of shape vector data and event information in the decision of block definition.

In case all the values of the division deciding parameter P is below a specified value in the first to fourth quadrants of the N-order partition in step S16, the partition-shape vector correspondence calculating section 315 searches for shape vector data contained in each partition (step S19). Then the partition-shape vector correspondence calculating section 315 generates transmission data concerning shape vector data and event information (step S20). Here, the partition-shape vector correspondence calculating section 315 generates a shape vector list 202 for associating shape vector data contained at least partially in each section, as well as the shape vector index data 201. The data encoding section 316 encodes the transmission data including the shape vector index data 201, shape vector list 202, shape vector data string 203 and event information 204 then performs data compression. The data transmitter 317 sends transmission data depending on the communications medium (step S21).

Operation procedure for reception, extraction and display transmission data in receiving side apparatus will be described referring to Fig. 8.

In the on-board apparatus 302 of the receiving side, first of all, the data receiver 320 receives the transmission data sent from the center apparatus 301. Then the data decoding section decodes the encoded/compressed transmission data to obtain the shape vector index data 201, shape vector list 202, shape vector data string 203 and event information 204. Next, the display area-partition number correspondence calculating section 324 calculates the area of latitude and longitude of the entire block as an information providing area based on the block definition of the shape vector index data 201 (step S32). The display area-partition number correspondence calculating section 324 calculates the area (processing area) of latitude and longitude currently displayed on the display section 334 or necessary for processing (step S33). Further, the display area-partition number correspondence calculating section 324 extracts the partition numbers of partitions that overlap the necessary processing area at least partially (step S34).

To determine which partitions the current image display area contains, for example the following decision method is used. On receiving the block definition, the lower left and upper light latitude and longitude are calculated for all partitions. Then, the lower left and upper light latitude and longitude of the area to be displayed on the display section 334 (or necessary area) are calculates. Thelatitude/longitudeareaofallthe partitions thus calculated is compared with the area of latitude/longitude area of the displayed area and the partitions where these areas are overlapped at least partially are determined as necessary partitions. This approach requires only simple arithmetical operation of the latitude and longitude data. This avoids an increase in calculation load and easy partition decision.

Next, the shape vector extracting section 325 extracts shape vector data and event information in the extracted partitions (step S35). In this practice, the shape vector extracting section 325 references the shape vector list 202 of the partitions and extracts the shape vector data included in the shape vector list 202 and the corresponding event information from the shape vector data string 203 and the event information 204. This allows easy extraction of shape vector data and event information positioned at least partially in the partitions.

Then, themapmatching section 327 uses the extracted shape vector data and event information and a digital map database owned by the local apparatus to perform shape matching (map matching) of the extracted shape vector data with the shape vector data of the local apparatus and identifies the road section corresponding to the shape vector data (step S36). The display controller 323 performs display control and displays map information on the display section 334 as well as superimposes the event on a map (step S37).

In case a partition is divided in accordance with the block definition of the embodiment, larger partitions are provided in less layers in the mountain areas while smaller partitions are provided in more layers in the urban areas. In the mountain areas, the probability that the shape vector data in the partition overlaps the display area is small for mountain areas. In the mountain areas, the amount of information is small so that expanding the partition causes smaller degradation in the display performance. In the urban areas, amount of information per unit area is greater so that smaller partitions are preferred in order to minimize useless data. Index data having such block definition allows efficient extraction and shape matching as well as display of necessary shape vector data and event information. This upgrades the processing efficiency in superimposing of event information on a map on on-board apparatus thus allowing high-speed display of data.

In this embodiment, shape vector data may extend over plural partitions and the same shape vector data may be defined in a plurality of partitions. Block definition may be varied arbitrarily depending on the increase/decrease in the data amount of shape vector data and event information. This allows flexible and proper partitioning depending on the road conditions.

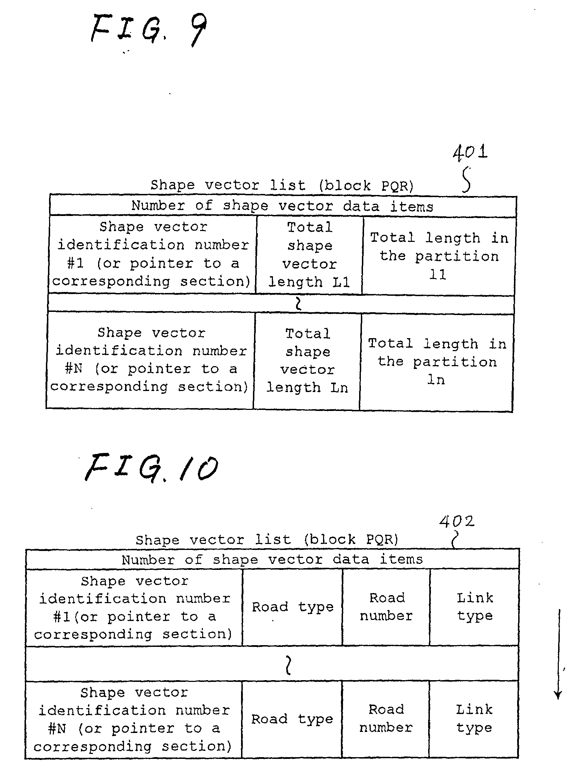

Variations of the embodiments will be described. Fig. 9 is an explanatory drawing showing a shape vector list according to a first variation. The first variation is an example where length information in the partition is added as attribute information in the shape vector list. In the shape vector list 401 are defined shape vector identification numbers allocated to each shape vector data items as well as the total shape vector length Ln and the total length in the partition. The length information is used as reference information to determine whether the data is to be displayed in order to determine whether the data is necessary shape vector data.

For example, in case the total length ln of the shape vector data in the partition is smaller than the specified value and the rate of the total length ln to the total shape vector length Ln (ln/Ln) is smaller than the specified value, display is omitted since display after map matching is not effective enough. Shape vector data satisfying the conditions in the partition is shape vector data only partially overlapping the end of the partition. Such data is of smaller importance in terms of display on the apparatus. When the CPU performance of the on-board apparatus is not high enough, such data is not extracted but discarded to reduce the processing load. In this way, it is possible to select shape vector data depending on the throughput of the receiving side on-board apparatus thus allowing efficient and proper display of event information.

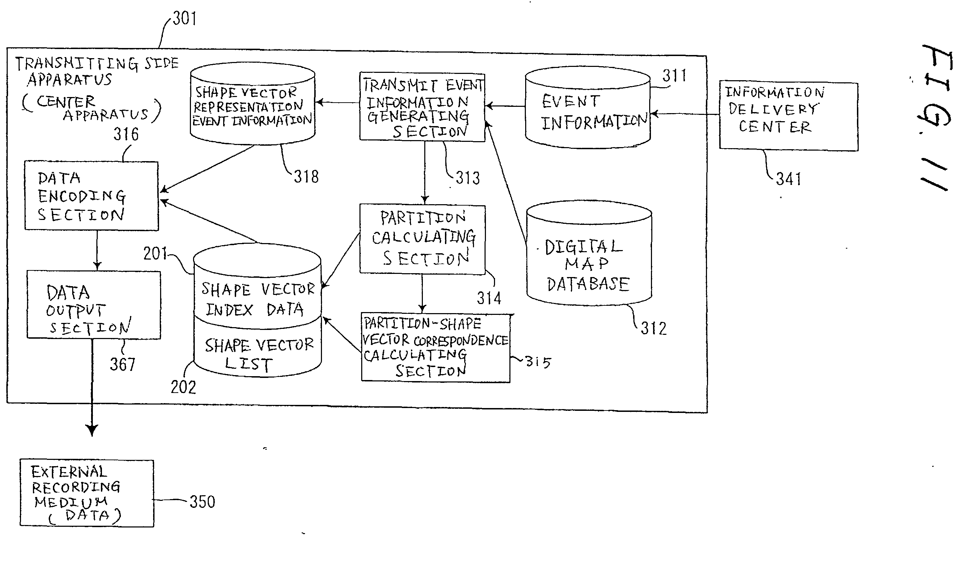

Fig. 10 is an explanatory drawing showing a shape vector list according to a second variation. The second variation is an example where road information such as road type is added as attribute information in the shape vector list. In the shape vector list 402 are defined shape vector identification numbers allocated to each shape vector data items as well as the road type such as national highway and prefectural road, road number such as national Highway XX, link type to identify connection roads to the main line and an interchange. In the shape vector list 402, shape vector data is araread in the ascending order of road type and road number (arrow in the figure). The road information is used as reference information to determine whether the data is to be displayed in order to determine whether the data is necessary shape vector data.

Generally in on-board navigationapparatus,the roadtypes of the higher specification is displayed as the display area is extended. Attribute information of such road information is thus used as reference information in extracting shape vector data to select necessary shape vector data. In particular, map display is made so that the number of types of roads displayed is reduced, such as "Expressways only" or "main local roads only" on a wide-area display. In case only national highways and higher-rank roads are displayed, the road information is referenced to extract only shape vector data of the only national highways and higher-rank roads. This reduces the processing road of extracting shape vector data. In this way, in the second variation, it is possible to select shape vector data depending on the road types displayed in case the road specifications vary with the area of the display area of map information, thus allowing efficient andproper display of event information.

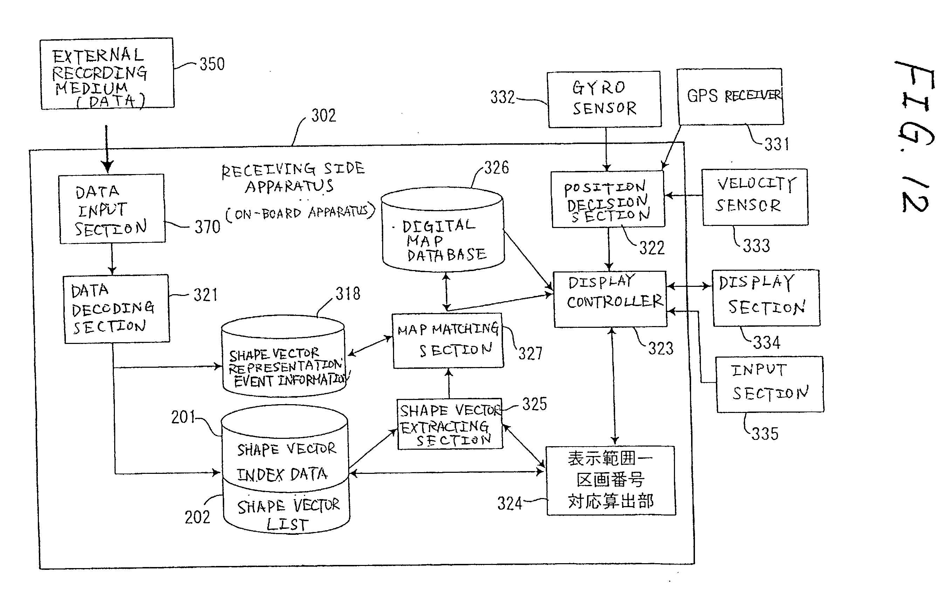

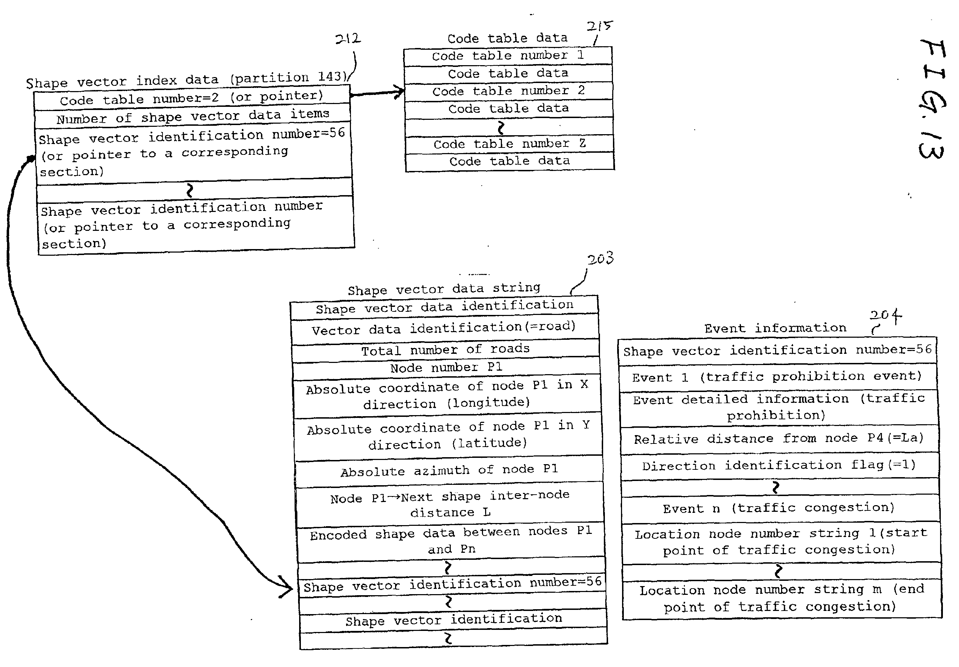

Figs. 11 and 12 show examples as a modified example of system configuration, the showed examples using external recording mediums as the means for transmitting information, which is the event information or such. The transmitting side apparatus 301, which is an apparatus in the information outputting side, includes the data output section 367. By the data output section 367, the data which is the event information or such is output to and recorded on the external recording medium 350. The external recording medium 350 is a portable medium, for example, a floppy disk, CD-ROM, DVD, a memory card, or such. The receiving side apparatus 302, which is the apparatus at the information inputting side, includes the data input section 370. By the data input section 370, the data, which is the event information or such and is recorded in the external recording medium 350, is input and taken in. The external recording medium 350 is used as information transmission means and equipped with the receiving side apparatus 302. The users of the receiving side apparatus 302 may buy the external recording medium 350, which may be pre-recorded, at a shop or a mail order. The users may also use a recordable medium as the external recording medium 350, and write data in the medium at a kiosk terminal, which is a counter terminal set up at a gas station or such, street terminal set up at a service spot on a street, or such. The other configurations are same as that shown in Figs. 5 and 6.

It is also possible to apply this embodiment as same as the example of the above mentioned configuration, in case of that the event information or such data is transmitted and received through the such external recording medium 350.

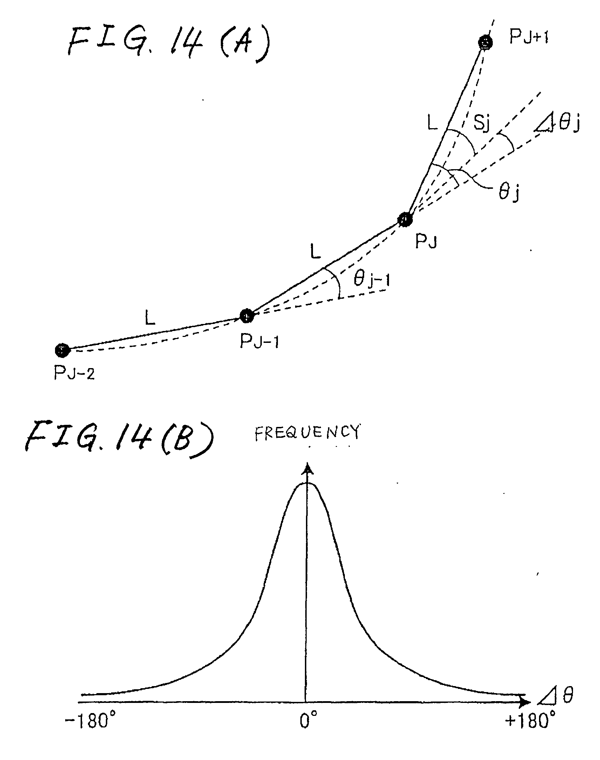

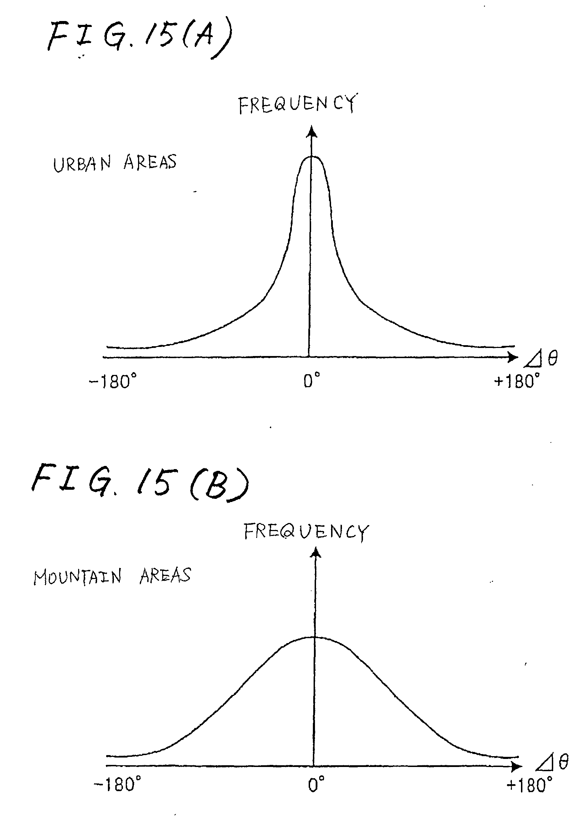

Fig. 13 is an explanatory drawing showing an example of transmission data structure according to the second embodiment of the invention. Fig. 14 is an explanatory drawing showing an example of vector data representation and distribution of its angle components. Fig. 15 is an explanatory drawing showing an example of distribution of angle components of shape vector data in the urban areas and mountain areas. The second embodiment is an example where code table data is added in the transmission data. The shape vector index data is the same as that of the first embodiment in Fig. 3 and is omitted in Fig. 13.

In case shape vector data is transmitted, data compression such as variable length coding and compression is performed in order to reduce the data amount and enhance the transmission efficiency. For example, in case the coordinates of each node are represented by the distance component and angle component from an adjacent node, the greater the statistical bias of the data frequency is, the more efficient compression is provided in general. In this embodiment, the angle component is represented in the difference of deflection angle Δθ with large statistical bias in the data frequency in encoding and compression.

As shown in Fig. 14 (A) , the distance component is assumed as a fixed distance L and the angle component is represented by a difference Δθ from the statistical prediction value S of the deflection angle θ with a line from the adjacent node. In case the coordinates of the node Pⱼ₊₁ are represented from the node Pⱼ, for the angle component, the deflection angle θⱼ between the line Pⱼ-Pⱼ₊₁ and the adj acent line Pⱼ₋₁-Pⱼ is represented by the statistical prediction value Sⱼ and the difference Δ θⱼ. The statistical prediction value Sⱼ may be selected so that Sⱼ=θⱼ₋₁ or Sⱼ=(θⱼ₋₁+ θⱼ₋₂)/2 by using the deflection angle θⱼ₋₁ between the line Pⱼ₋₁-Pⱼ and the adjacent line Pⱼ₋₂-Pⱼ₋₁.

The difference of the deflection angle Δθ shows a strong bias around 0 degrees as illustrated in Fig. 14 (B). Thus, variable length coding and compression of such shape vector data allows highly efficient data compression and reduces data amount. Data amount of the distance component may be reduced by quantizing the nodes in the digital map database by using the fixed distance L for later sampling.

Distribution of the angle component in the shape vector data shown in Fig. 14(B) generally shows different tendencies between urban areas and mountain areas. In the urban areas, straight roads are dominant and there are may crossings so that a similar road shape approximately linear is repeated between nodes. As shown in Fig. 15(A), distribution of the angle component is greatly biased around 0 degrees. In the mountain areas, there are more curve-shaped roads and less crossings with linger inter-node distance and larger curvature change of roads. Therefore, Distribution of the angle component is somewhat varied around 0 degrees, as shown in Fig. 15(B).

Performing encoding and compression by using different code tables for urban areas and mountain areas by taking advantage of the characteristics of the shape vector data further allows efficient data compression. In this embodiment, a plurality of code tables used for encoding and compression of shape vector data are provided. Encoding and decoding are performed by specifying an optimum code table for each partition. A code table may be specified on the basis of shape vector data.

In the transmission data shown in Fig. 13, the shape vector list 212 has the number of shape vector data items contained in the partition and shape vector identification numbers allocated to the shape vector data items as well as a code table number indicating the code table data used for encoding and compression of shape vector data in the partition. The code table number serves as a pointer to corresponding code table data.

The code table data 215 is a group of a plurality of code table data items appropriated for encoding and compression of various shape vector data and has respective code table numbers and code table data.

In this embodiment, the center apparatus of the transmitting side sets an optimum code table per partition and adds the corresponding code table number to generate a shape vector list 212 in the course of block definition and generation of transmission data. The center apparatus performs encoding by using the code table set per partition in encoding and compression of shape vector data. The on-board apparatus of the receiving side references the code table number in the shape vector list 212 and obtains the code table data corresponding to the partition from the code table data 215, in the course of decoding the shape vector data.

A partition of a small area in the depth of minute layers such as a tertiary partition is considered a partition in urban areas. So a code table compatible with the shape vector data distribution in urban areas is specified. A partition of a large area such as a primarypartition as a final one is usually a partition in mountain areas. In this case a code table compatible with the shape vector data distribution in mountain areas is specified. For an intermediate partition, a code table compatible with the shape vector data distribution in suburban areas is specified. By specifying a code table depending on the depth of layer of a partition, it is made easy to specify an optimum code table per partition. An optimum code table may be determined by referencing shape vector data contained in each partition.

In this way, in the second embodiment, it is possible to enhance the compression efficiency of transmission data by specifying an optimum code table for encoding and compression on a per partition basis or on a per shape vector data basis. It is also possible, when extracting shape vector data necessary for displaying event information, to efficiently obtain the corresponding code table data for later decoding by using the index data in a code table in the shape vector data list. This enhances the processing efficiency concerning transmission of shape vector data and event information and superimposing of event information, and assuring high-speed display of data.

variations of the embodiment will be described. While shape vector data is presented by showing the start point of each data item by absolute coordinates in the foregoing example, it is possible to represent the latitude and longitude of shape vector data by a relative position from the origin of each partition. This reduces the number of bits required for representation of latitude/longitude and reduces the number of digits for representation of the latitude/longitude of shape vector data as the partition gets more and more minute.

The partition number of the partition may be added to each of the shape vector data items without using the shape vector data list. This approach allows extraction of shape vector data based on the partition containing the data.

The area in the directions of latitude and longitude (maximum value, minimum value) may be added to each of the vector data items. In this case, one of the maximum value and the minimum value may be represented by a relative position from the other. That is, it is possible to add attribute information indicating the approximate position for index of the position of each shape vector data item. This approach allows extraction of shape vector data based on the position of data.

An error o f the map may be considered in determining whether shape vector data is present in a partition. For example, in case another partition is present within ±α meters in the direction of the normal to the shape vector data, the partition is also addressed considering an error. This allows extraction of more minute shape vector data.

In case shape vector data is deformed for data compression or prevention of erroneous matching, determination is allowed on which partition contains the shape vector data before deformation, the shape vector data after deformation, or the shape vector data before and after deformation, to perform extraction decision of shape vector data.

Thus, according to this embodiment, it is possible to efficiently extract shape vector data necessary for processing such as display of data, by performing block definition to divide the entire area into a plurality of layers and using index data to reference shape vector data contained in each partition. This reduces the number of map matching processes that require great processing time and allows high-speed drawing of event information superimposed on the map information.

While the invention has been described in detail referring to particular embodiments, those skilled in the art will appreciate that the invention may be modified or corrected in various forms without departing from the spirit and the scope of the invention.

This application is based on the Japanese Patent Application No. 054076/2002 filed February 28, 2002, which is incorporated herein by reference.

### < Advantage of the Invention >

As mentioned hereabove, according to the invention, it is possible to efficiently extract information on the area necessary for representing the information including shape information as map information such as roads and related information on the events such as traffic congestions and accidents as well as their positions in transmitting and representing such information.

## Claims

1. A position information transmission apparatus for transmitting a position on a digital map comprising:
position information generating means for generating position information including shape information, which represent a shape of an object on a map and have a road shape data representing a road shape within a predetermined road section, and related information, which have a relative position data indicating a position within the predetermined road section corresponding to the shape information;
index information generating means for generating index information, which indicate correspondence of shape information contained in individual partitions, by dividing an information providing area of the shape information and related information into a plurality of partitions;
information transmission means for transmitting transmission data having the position information and the index information;
information receiving means for receiving the transmission data and obtaining the position information and the index information;
shape information extracting means for calculating a necessary partition from the divided plurality of partitions and extracting shape information contained in the partition; and
position identification means for performing shape matching of the extracted shape information to identify a section represented by the shape information on a digital map and identifying a position in the section by using the related information corresponding to the shape information.

2. The position information transmission apparatus according to claim 1,
wherein the position information generating means generates, as the related information, event information representing an event related to road traffic by using a relative position corresponding to the shape information, and
the position information transmission apparatus further comprising:
information representation means for representing the event information on the position, which is identified by the position identification means on the digital map, with superposing on the digital map within predetermined area.

3. The position information transmission apparatus according to claim 1,
wherein the index information generatingmeans generates, as the index information,
block definition indicating the position and area of a entire block of the information providing area and the number of partitions in the entire block,
reference data indicating correspondence between the partitions, and
a shape information list indicating shape information in each partition by extracting the shape information from each partition and listing the extracted shape information.

4. The position information transmission apparatus according to claim 3,
wherein, when the index information means determines the block definition and divides the block into a plurality of partitions, the index information generating means performs dividing the block into partitions repeatedly by using the shape information in the block and a partition criteria parameter utilized as a standard of a processing amount the related information until a predetermined condition defined by the partition criteria parameter is satisfied.

5. The position information transmission apparatus according to claims 3 or 4,
wherein the index information generating means determines the block definition variably depending on the state of the shape information and related information and divides the block into a plurality of partitions.

6. The position information transmission apparatus according to claim 3,
wherein the shape information extracting means extracts a block at least partially overlapping a necessary processing area based on the position and the area of the entire block determined by the block definition and the area where the related information is represented, and extracts shape information in the extracted block based on the reference data and shape information list.

7. The position information transmission apparatus according to claim 1, further comprising:
a plurality of code tables used for coding the shape information;
wherein the index information generating means generates, as the index information, code table information for referencing a suitable code table to coding of shape information in each partition of the divided block in the partitions.

8. A position information transmission apparatus for transmitting a position on a digital map comprising a transmitting side apparatus,
wherein the transmitting side apparatus includes:
position information generating means for generating position information including shape information, which represent a shape of an object on a map and have a road shape data representing a road shape within a predetermined road section, and related information, which have a relative position data indicating a position within the predetermined road section corresponding to the shape information;
index information generating means for generating index information, which indicate correspondence of shape information contained in individual partitions, by dividing an information providing area of the shape information and related information into a plurality of partitions; and
information transmission means for transmitting transmission data having the position information and the index information.

9. A position information transmission apparatus for transmitting a position on a digital map comprising a receiving side apparatus,
wherein the receiving side apparatus includes:
information receiving means for receiving transmission data transmitted from a transmitting side apparatus and obtaining position information and the index information, wherein the position information include shape information which represent a shape of an object on a map and have a road shape data representing a road shape within a predetermined road section, and related information which have a relative position data indicating a position within the predetermined road section corresponding to the shape information, and wherein the index information indicate correspondence of shape information contained in individual partitions by dividing an information providing area of the shape information and related information into a plurality of partitions;
shape information extracting means for calculating a necessary partition from the divided plurality of partitions and extracting shape information contained in the partition;
position identification means for performing'shape matching of the extracted shape information to identify a section represented by the shape information on a digital map and identifying a position in the section by using the related information corresponding to the shape information; and
information representation means for representing the related information on the position, which is identified by the position identificationmeans on the digital map, with superposing on the digital map within predetermined area.

10. The position information transmission apparatus according to claim 1,
wherein attributeinformationofthepositioninformation is added to the index information.

11. The position information transmission apparatus according to claim 1,
wherein the index information includes the area of the shape information.

12. A position information transmission apparatus for transmitting a position on a digital map comprising:
position information generating means for generating position information including shape information, which represent a shape of an object on a map and have a road shape data representing a road shape within a predetermined road section, and related information, which have a relative position data indicating a position within the predetermined road section corresponding to the shape information;
index information generating means for generating index information, which indicate correspondence of shape information contained in individual partitions, by dividing an information providing area of the shape information and related information into a plurality of partitions;
information output means for outputting transmission data having the position information and the index information against information transmission means;
information input means for inputting the transmission data transmitted through the information transmission means and obtaining the position information and the index information;
shape information extracting means for calculating a necessary partition from the divided plurality of partitions and extracting shape information contained in the partition; and
position identification means for performing shape matching of the extracted shape information to identify a section represented by the shape information on a digital map and identifying a position in the section by using the related information corresponding to the shape information.

13. A position information transmission apparatus for transmitting a position on a digital map comprising an outputting side apparatus,
wherein the outputting side apparatus includes:
position information generating means for generating position information including shape information, which represent a shape of an object on a map and have a road shape data representing a road shape within a predetermined road section, and related information, which have a relative position data indicating a position within the predetermined road section corresponding to the shape information;
index information generating means for generating index information, which indicate correspondence of shape information contained in individual partitions, by dividing an information providing area of the shape information and related information into a plurality of partitions; and
information output means for outputting transmission data having the position information and the index information.

14. A position information transmission apparatus for transmitting a position on a digital map comprising a inputting side apparatus,
wherein the inputting side apparatus includes:
information input means for inputting transmission data transmitted through information transmission means and obtaining position information and the index information, wherein the position information include shape information which represent a shape of an obj ect on a map and have a road shape data representing a road shape within a predetermined road section, and related information which have a relative position data indicating a position within the predetermined road section corresponding to the shape information, and wherein the index information indicate correspondence of shape information contained in individual partitions by dividing an information providing area of the shape information and related information into a plurality of partitions;
shape information extracting means for calculating a necessary partition from the divided plurality of partitions and extracting shape information contained in the partition;
position identification means for performing shape matching of the extracted shape information to identify a section represented by the shape information on a digital map and identifying a position in the section by using the related information corresponding to the shape information; and
information representation means for representing the related information on the position, which is identified by the position identificationmeans on the digital map, with superposing on the digital map within predetermined area.

15. A position information transmission method for transmitting a position on a digital map comprising the steps of:
position information generating for generating position information including shape information, which represent a shape of an object on a map and have a road shape data representing a road shape within a predetermined road section, and related information, which have a relative position data indicating a position within the predetermined road section corresponding to the shape information;
index information generating for generating index information, which indicate correspondence of shape information contained in individual partitions, by dividing an information providing area of the shape information and related information into a plurality of partitions;
transmitting information for transmitting transmission data having the position information and the index information;
receiving information for receiving the transmission data and obtaining the position information and the index information;
extracting shape information for calculating a necessary partition from the divided plurality of partitions and extracting shape information contained in the partition; and
identifying position for performing shape matching of the extracted shape information to identify a section represented by the shape information on a digital map and identifying a position in the section by using the related information corresponding to the shape information.

16. A position information transmission method for transmitting a position on a digital map comprising the steps of:
position information generating for generating position information including shape information, which represent a shape of an object on a map and have a road shape data representing a road shape within a predetermined road section, and related information, which have a relative position data indicating a position within the predetermined road section corresponding to the shape information;
index information generating for generating index information, which indicate correspondence of shape information contained in individual partitions, by dividing an information providing area of the shape information and related information into a plurality of partitions;
outputting information for outputting transmission data having the position information and the index information against information transmission means;
inputting information for inputting the transmission data transmitted through the information transmission means and obtaining the position information and the index information;
extracting shape information for calculating a necessary partition from the divided plurality of partitions and extracting shape information contained in the partition; and
identifying position for performing shape matching of the extracted shape information to identify a section represented by the shape information on a digital map and identifying a position in the section by using the related information corresponding to the shape information.

17. A program used by a computer to execute a position information transmission method according to claims 15 or 16.
